**Europäisches Patentamt**

**European Patent Office**

**Office européen des brevets**

(11) Publication number: **0 133 740**
**B1**

## (12) EUROPEAN PATENT SPECIFICATION

(45) Date of publication of patent specification: **16.08.89**

(21) Application number: **84304001.5**

(22) Date of filing: **14.06.84**

(51) Int. Cl.⁴: **B 25 F 5/00**

(54) Locking system for power tools.

(30) Priority: **11.08.83 US 522010**

(43) Date of publication of application:
**06.03.85 Bulletin 85/10**

(45) Publication of the grant of the patent:
**16.08.89 Bulletin 89/33**

(84) Designated Contracting States:
**DE FR GB IT NL SE**

(56) References cited:
**DE-A-2 816 398**
**GB-A-2 020 771**
**US-A-1 649 060**
**US-A-2 807 732**
**US-A-3 899 852**
**US-A-3 936 203**

(73) Proprietor: **Black & Decker Inc.**
**Drummond Plaza Office Park 1423 Kirkwood Highway**
**Newark Delaware 19711 (US)**

(72) Inventor: **Heck, Edward Anthony**
**2805 Rainbow Drive**
**Westminster Maryland 21157 (US)**

(74) Representative: **Lucas, Brian Ronald et al**
**Lucas, George & Co. 135 Westhall Road**
**Warlingham Surrey CR3 9HJ (GB)**

## Description

This invention relates to a locking system for power tools and, more particularly but not exclusively, to a replaceable locking system for an abrading tool.

When it is desired to change a working element of a power tool, (for example the abrading member of a grinder) it is necessary to restrain the spindle on which the working element is mounted from rotation relative to the tool housing. This may be achieved by the use of a locking system which includes a lock member slideably mounted in the housing and movable to engage a driven element fast with the spindle and thereby lock the spindle against rotation. Occasionally the lock member is damaged upon engagement with the driven element and replacement of the lock member becomes necessary.

In one system it is necessary to dismantle the power tool adjacent the locking system. US-A-3 899 852 is one example of such a system which incorporates a lock member which can be depressed against the force of a spring to engage a driven element comprising a rotatable gear fast with the spindle. The lock member is retained in place by a snap ring mounted in an annular groove on the lock member within the tool housing interior. With this arrangement it is essential that the tool is dismantled to replace the lock member.

In another system (US-A-3 021 723) a locking member has an annular shoulder formed thereon which is trapped by an internal ledge formed in the tool gear case housing. Again the tool must be dismantled to remove the lock member.

US-A-1 649 060 discloses a locking system for a power tool, comprising:

(a) a housing member;

(b) a driven element mounted on said housing member for movement relative thereto;

(c) a lock channel in said housing member;

(d) a lock member comprising an elongate body slideably movable in said lock channel and displaceable to lock said driven element against motion relative to said housing member; and

(e) retaining means accessible from outside said housing member for releasably maintaining said lock member connected to said housing member.

The arrangement disclosed has the disadvantage that the retaining means (a pin) can fall out of the housing member thereby releasing the lock member.

The present invention enables the lock member to be replaced without normally having to open the tool housing. Furthermore, at least in preferred embodiments, the retaining means will not become separated from the power tool in normal use.

According to the present invention there is provided a locking system for a power tool, comprising:

(a) a housing member;

(b) a driven element mounted on said housing member for movement relative thereto;

(c) a lock channel in said housing member;

(d) a lock member comprising an elongate body slideably movable in said lock channel and displaceable to lock said driven element against motion relative to said housing member;

and (e) retaining means accessible from outside said housing member for releasably maintaining said lock member connected to said housing member;

characterized in that:

(f) said housing member is provided with an external recess open at one end thereof;

(g) said retaining means includes a retaining member defining an aperture which accommodates said lock member; and

(h) said retaining member is slideably movable in said recess and is removable from the open end of said recess only when said lock member is disengaged from the aperture of said retaining member.

Advantageously:-

(a) said retaining means further includes a retaining portion formed in said external recess;

(b) said lock member has a shoulder formed thereon;

(c) said retaining member is normally retained between said retaining portion and the shoulder of said lock member; and

(d) said shoulder is located on said lock member such that said lock member remains wholly within the external recess when the retaining member engages said shoulder.

Advantageously, said retaining portion comprises a bifurcated ledge open at one end; and the exposed end of said lock member normally protrudes through said retaining member and between the arms of the bifurcated ledge.

Preferably, said locking system further comprise:-

(a) biasing means normally urging the lock member into engagement with the retaining member;

(b) the retaining member having a lower surface; and

(c) the retaining member being slideably removable from the space below the bifurcated ledge upon movement of the exposed end of the lock member below the lower surface of the retaining member, against the urging of the biasing means.

Advantageously:-

(a) said lock channel has a reduced diameter portion; and

(b) said biasing means is located in the lock channel coaxial with the lock member, and acts between the reduced-diameter portion of said lock channel and the shoulder on the lock member.

Desirably:-

(a) said lock member is movable a first predetermined distance and a second predetermined distance in the housing member in a direction towards the driven element; and

(b) the first predetermined distance is sufficient to permit the lock member to engage the driven element, and the second predetermined distance is sufficient to enable the retaining means to be released from the housing member.

Preferably:-

(a) said lock member has a first end and a second end, said shoulder is disposed a third predetermined distance from the first end;

(b) the second predetermined distance is greater than the first predetermined distance; and

(c) the third predetermined distance is selected to permit disengagement of the first end from the aperture of the retaining member when the lock member has moved the second predetermined distance, but maintains the lock member in engagement with the aperture of the retaining member until the lock member has moved said second predetermined distance.

Advantageously, said driven element is rotatably connected to said housing member.

The present invention also provides a power tool including a locking member in accordance with the present invention.

The present invention also provides a method for replacing the lock member of a locking system according to the invention, characterized in that said method comprises the steps of;

(a) depressing the lock member inwardly towards the driven element until the lock member becomes disengaged from retaining engagement with the retaining member;

(b) Moving the retaining member until the lock member is freely removable from the housing member;

(c) removing the lock member;

(d) providing a replacement lock member;

(e) inserting the replacement lock member into the housing member;

(f) depressing the replacement lock member inwardly towards the driven element until the retaining member can be replaced;

(g) moving the retaining member into a retaining position on the housing member; and

(h) releasing the lock member.

For a better understanding of the invention reference will now be made, by way of example, to the accompanying drawings, in which:-

FIGURE 1 is a side elevational view of a power tool incorporating a locking system in accordance with the present invention with a portion of the grinding wheel guard cut away for clarity;

FIGURE 2 is an enlarged elevational sectional detail view, partially cut away, of the drive spindle subassembly of the power tool in FIGURE 1 with the grinding wheel and grinding wheel guard removed;

FIGURE 3 is an exploded perspective detail view of the locking system;

FIGURE 4 is a front elevational perspective view of part of the power tool with the grinding wheel and grinding wheel guard removed; and

FIGURES 5A to 5E are elevational sectional detail views of the locking system, in which:

FIGURE 5A shows a damaged lock member retained in place in the housing;

FIGURE 5B shows the retaining member moved transverse to the lock pin axis after the lock member is depressed out of locking engagement with the retaining member;

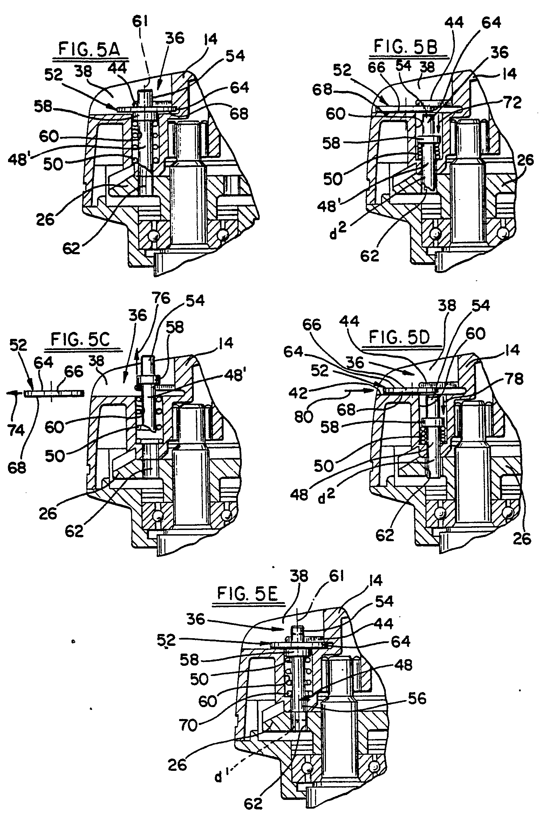

FIGURE 5C shows the retaining member moved out of engagement from the lock member, permitting the lock member to be removed from the housing;

FIGURE 5D shows a replacement lock member inserted into the housing against the urging of the biasing means, and the retaining member being inserted into the housing; and

FIGURE 5E shows the replacement lock member retained in place by the retaining member, and the retaining member in turn retained in place by the lock member.

DESCRIPTION OF PREFERRED EMBODIMENT

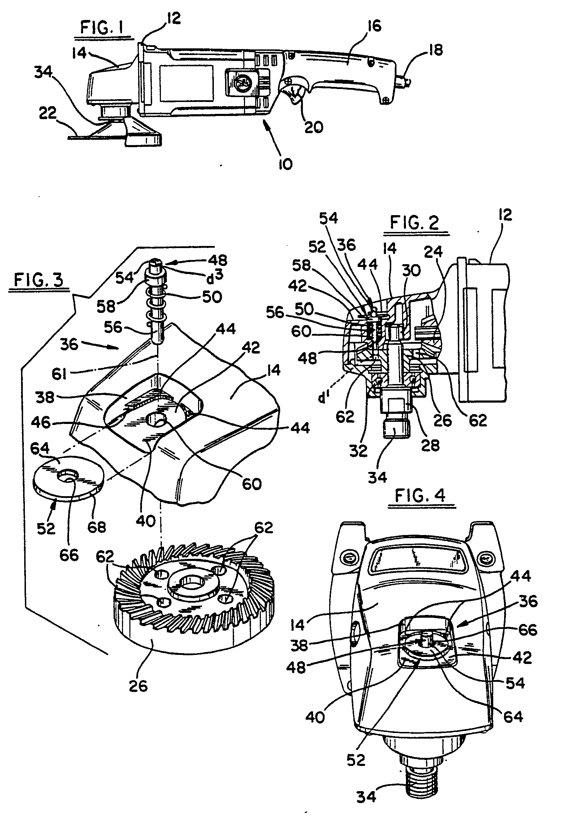

A power tool having a locking system in accordance with the present invention is referred to generally as 10 in FIGURE 1. The power tool 10 shown is a portable grinder having a tool housing 12 including a housing member 14 at the front of the housing 12 and a handle portion 16 containing a line cord 18 electrically connected to switch 20. The switch 20 is in turn electrically connected to an electric motor (not shown) to rotatably drive an abrading element 22.

Referring now to FIGURE 2, the housing member 14 encloses a drive pinion 24 driven by the motor (not shown). The drive pinion 24 drives a driven element comprising gear 26, which is connected fast to tool spindle 28. The tool spindle 28 is rotatably journaled in bearings 30 and 32 and is drivingly connected at its exposed portion 34 to the abrading member 22 shown in FIGURE 1.

The locking system is shown generally as 36 in FIGURES 2, 3, 4 and 5A to 5E. Referring to FIGURES 2, 3 and 4, the locking system 36 includes an external recess 38 open at one end 40 thereof formed in the upper front portion of the housing member 14 and including a bottom portion 42. A retaining surface is defined by a bifurcated ledge 44 open at one end 46 adjacent the open end 40 of the external recess 38, and lying in a first plane. The locking system 36 further includes a lock member 48, biasing means 50 and retaining means 52.

Referring to FIGURES 2, 3 and 5E, the lock member 48 is an elongated cylinder having a first or exposed end 54, a second or locking end 56 and a flange portion defined by an annular shoulder 58. Referring to FIGURE 5E, the lock member 48 is slideably movable in a lock channel 60 along an axis 61 a first distance $d'$ (shown in phantom in FIGURES 2 and 5E) from its normal position, to enter one of a plurality of driven element lock cavities 62, thereby retaining or locking the driven element 26 against movement relative to the housing member 14, the lock cavities 62 being registrable with lock channel 60. Also, as shown in FIGURE 5D the lock member 48 is movable a second, longer predetermined distance $d^2$ from its normal position, along the lock channel 60 so that the lock member exposed end 54 is substantially flush with the recess bottom portion 42. Accordingly, as shown in FIGURE 3, the annular shoulder 58 is located a third pre-

determined distance $d^3$ from the exposed end 54, which is related to distance $d^2$.

Now with respect to FIGURES 2, 3 and 4, the retaining means 52 includes a retaining member such as a disc or washer 64 defining an aperture 66 and having a lower surface 68. The retaining member 64 is slideably mounted in the housing member external recess 38 in a second plane. Referring to FIGURES 3 and 4, the retaining member 64, when fully mounted in the tool 12, is trapped between the recess bottom portion 40 and the bifurcated ledge 44, with the exposed end 54 of the lock member 48 engaging the retaining member 64 via aperture 66. Thus both the bifurcated ledge 44 and the retaining member 64 intersect the lock member axis 61, in their respective first and second planes.

FIGURE 5E shows that the biasing means 50 includes a coil spring coaxially mounted in the lock channel 60 about the lock member 48, such that one end bears against lock member shoulder 58, and the other end is trapped against a reduced-diameter portion 70 of the lock channel 60. As a result the biasing means 50 normally urges the lock member 48 out of engagement with the lock cavity 62 of driven element 26, and further normally urges the lock member 48 into retaining engagement with the retaining member 64. The shoulder 58 bears against retaining member 64, which in turn is retained by ledge 44 against vertical movement and by lock member 48 against transverse movement. Thus spring 50 is part of a means for simultaneously maintaining both the lock member 48 and the retaining member 64 connected to the housing 12, and for selectively releasing the lock member 48 from the housing 12 responsive to operator actuation of the lock member 48.

This coaction of the ledge 44, retaining member 64 and the spring-biased lock member 48 is illustrated in FIGURES 5A to 5E, which show the sequence of operation in replacing a damaged lock member. In FIGURE 5A, a damaged lock member 48' is automatically retained in the housing 12 by the just-described coaction of the elements of the locking system 36. When it is desired to replace the damaged lock member 48', the operator depresses the lock member 48' against the urging of the biasing means 50, as shown by arrow 72 in FIGURE 5B, until the first or exposed end 54 of lock member 48' is removed from locking or retaining engagement with retaining member aperture 66, the exposed end 54 being immediately below the retaining member lower surface 68. Still referring to FIGURE 5B, with the lock member 48' depressed, the retaining member 64 is slideably moved transversely of the lock member 48. It can be seen that a portion of the retaining member 64 actually slides over the exposed end 54 of the lock member, thereby assisting in maintaining the lock member 48' out of locking engagement with retaining member 64. At this point, the lock member has travelled the second predetermined distance, $d^2$, being deeply inserted into the drive element lock cavity 62.

In FIGURE 5C, the retaining member 64 has been moved far enough, in the direction shown by arrow 74, to allow the lock member 48' to be freely removed from the housing member 14, as shown by arrow 76.

As shown in FIGURE 5D, when a replacement lock member 48 is provided, it is first inserted into the housing member 14, again, against the urging of the biasing means 50 in the direction shown by arrow 78, until the lock member exposed end 54 once again can clear the retaining member lower surface 68, the lock member having again travelled the second predetermined distance $d^2$ in the lock channel 60 and into engagement with driven member lock cavity 62. Then the retaining member 64 may be inserted in the direction shown by arrow 80 until its aperture 66 is once again in registration with lock channel 60.

In FIGURE 5E, the lock member 48 is shown after being released by the operator, now once again, at the urging of the biasing means 50, automatically retaining the retaining member 64 in the housing and being retained therein in turn by the retaining member 64.

Thus both the retaining member 64 and the lock member 48 are completely accessible to the operator from outside the housing, there by precluding any necessity for disassembling the power tool to replace the lock member 48 (or the retaining member 64). Also the assembled locking system maintains both the lock member exposed end 54, as well as the retaining member 64, secreted within the housing member recess 38.

## Claims

1. A locking system for a power tool, comprising:

(a) a housing member (14);

(b) a driven element (26) mounted on said housing member (14) for movement relative thereto;

(c) a lock channel (60) in said housing member (14);

(d) a lock member (48) comprising an elongate body slideably movable in said lock channel (60) and displaceable to lock said driven element (26) against motion relative to said housing member (14); and

(e) retaining means accessible from outside said housing member (14) for releasably maintaining said lock member (48) connected to said housing member (14);

characterized in that:

(f) said housing member (14) is provided with an external recess (38) open at one end (40) thereof;

(g) said retaining means includes a retaining member (64) defining an aperture (66) which accommodates said lock member (48); and

(h) said retaining member (64) is slideably movable in said recess (38) and is removable from the open end of said recess (38) only when said lock member (48) is disengaged from the aperture (66) of said retaining member (64).

2. A locking system as claimed in Claim 1, wherein:

(a) said retaining means further includes a retaining portion (44) formed in said external recess (38);

(b) said lock member (48) has a shoulder (58) formed thereon;

(c) said retaining member (64) is normally retained between said retaining portion (44) and the shoulder (58) of said lock member (48); and

(d) said shoulder (58) is located on said lock member (48) such that said lock member (48) remains wholly within the external recess (38) when the retaining member (64) engages said shoulder (58).

3. A locking system as claimed in Claim 2, wherein said retaining portion (44) comprises a bifurcated ledge open at one end; and the exposed end (54) of said lock member (14) normally protrudes through said retaining member (64) and between the arms of the bifurcated ledge.

4. A locking system as claims in Claim 3, further comprising:

(a) biasing means (50) normally urging the lock member (48) into engagement with the retaining member (64);

(b) the retaining member (64) having a lower surface; and

(c) the retaining member (64) being slideably removable from the space below the bifurcated ledge upon movement of the exposed end (54) of the lock member (48) below the lower surface of the retaining member (64) against the urging of the biasing means (50).

5. A locking system as claimed in Claim 4, wherein:

(a) said lock channel (60) has a reduced-diameter portion (70); and

(b) said biasing means (50) is located in the lock channel (60) coaxial with the lock member (48), and acts between the reduced-diameter portion (70) of said lock channel (60) and the shoulder (58) on the lock member (48).

6. A locking system as claimed in any preceding Claim, wherein:

(a) said lock member (48) is movable a first predetermined distance ($d^1$) and a second predetermined distance ($d^2$) in the housing member (14) in a direction towards the driven element (26); and

(b) the first predetermined distance ($d^1$) is sufficient to permit the lock member (48) to engage the driven element (26), and the second predetermined distance ($d^2$) is sufficient to enable the retaining means (64) to be released from the housing member (14).

7. A locking system as claimed in Claim 6, when appended to any one of Claims 2 to 5, wherein:

(a) said lock member (48) has a first end (54) and a second end (56), said shoulder (58) is disposed a third predetermined distance ($d^3$) from the first end (54);

(b) the second predetermined distance ($d^2$) is greater than the first predetermined distance ($d^1$); and

(c) the third predetermined distance ($d^3$) is selected to permit disengagement of the first end (54) from the aperture (66) of the retaining member (64) when the lock member (48) has moved the second predetermined distance ($d^2$), but maintains the lock member (48) in engagement with the aperture (66) of the retaining member (64) until the lock member (48) has moved said second predetermined distance ($d^2$).

8. A locking system as claimed in any preceding Claim, wherein said driven element (26) is rotatably connected to said housing member (14).

9. A power tool including a locking system as claimed in any preceding Claim.

10. A method for replacing the lock member (48) of a locking system according to Claim 1, characterized in that said method comprises the steps of:

(a) depressing the lock member (48) inwardly towards the driven element (26) until the lock member (48) becomes disengaged from retaining engagement with the retaining member (64);

(b) moving the retaining member (64) until the lock member (48) is freely removable from the housing member (14);

(c) removing the lock member (48);

(d) providing a replacement lock member (48);

(e) inserting the replacement lock member (48) into the housing member (14);

(f) depressing the replacement lock member (48) inwardly towards the driven element (26) until the retaining member (64) can be replaced;

(g) moving the retaining member (64) into a retaining position on the housing member (14); and

(h) releasing the lock member (48).

**Patentansprüche**

1. Verriegelungssystem für ein kraftgetriebenes Werkzeug, enthaltend:

(a) ein Gehäuseelement (14);

(b) ein zur Bewegung relativ zum Gehäuseelement (14) auf diesem befestigtes angetriebenes Element (26);

(c) einen Verriegelungskanal (60) im Gehäuseelement (14);

(d) ein Verriegelungselement (48) aufweisend einen länglichen Körper, der im Verriegelungskanal (60) gleitend bewegbar ist und zur Verriegelung des angetriebenen Elementes (26) gegen Relativbewegung bezüglich dem Gehäuseelement (14) verlagerbar ist;

(e) von außerhalb des Gehäuseelementes (14) zugängliche Haltemittel zum lösbaren Halten des Verriegelungselementes (48) in Verbindung mit dem Gehäuseelement (14);

dadurch gekennzeichnet, daß

(f) das Gehäuseelement (14) mit einer an einem Ende (40) offenen äußeren Aussparung (38) versehen ist,

(g) die Haltemittel ein Halteelement (64) aufweisen, das eine Öffnung (66) hat, die an das Verriegelungselement (48) angepaßt ist, und

(h) das Halteelement (64) in der Aussparung (38) verschiebbar beweglich und aus dem offenen Ende der Aussparung (38) nur entfernbar ist, wenn das Verriegelungselement (48) außer Eingriff mit der Öffnung (66) des Halteelementes (64) steht.

2. Verriegelungssystem nach Anspruch 1, bei dem

(a) die Haltemittel ferner einen in der äußeren Aussparung (38) ausgebildeten Haltebereich (44) aufweisen,

(b) das Verriegelungselement (48) eine an ihm ausgebildete Schulter (58) aufweist,

(c) das Halteelement (64) normalerweise zwischen dem Haltebereich (44) und der Schulter (58) des Verriegelungselementes (48) gehalten ist

(d) die Schulter (58) derart am Verriegelungselement (48) angeordnet ist, daß das Verriegelungselement (48) vollständig innerhalb der äußeren Aussparung (38) bleibt, wenn das Halteelement (64) in Eingriff mit der Schulter (58) steht.

3. Verriegelungssystem nach Anspruch 2, bei dem der Haltebereich (44) einen an einem Ende offenene, gegabelten Absatz aufweist und das freie Ende (54) des Verriegelungselements (14) normalerweise durch das Halteelement (64) und zwischen die Arme des gegabelten Absatzes ragt.

4. Verriegelungssystem nach Anspruch 3, ferner aufweisend:

(a) Federmittel (50), die normalerweise das Verriegelungselement (48) in Eingriff mit dem Halteelement (64) drücken,

(b) eine untere Fläche am Halteelement (64) und

(c) eine gleitende Verschiebbarkeit des Halteelementes (64) vom Raum unterhalb des gegabelten Absatzes bei Bewegung des freien Endes (54) des Verriegelungselementes (48) unter die untere Fläche des Halteelementes (64) gegen den Druck der Federmittel (50).

5. Verriegelungssystem nach Anspruch 4, bei dem

(a) der Verriegelungskanal (60) einen Bereich (70) mit verringertem Durchmesser aufweist, und

(b) die Federmittel (50) im Verriegelungskanal (60) koaxial zum Verriegelungselement (48) angeordnet sind und zwischen dem Bereich (70) des Verriegelungskanals (60) mit verriegeltem Durchmesser und der Schulter (58) am Verriegelungselement (48) wirken.

6. Verriegelungssystem nach einem der vorhergehenden Ansprüche bei dem

(a) das Verriegelungselement (48) im Gehäuseelement (14) eine erste vorbestimmte Strecke ($d^1$) und eine zweite vorbestimmte Strecke ($d^2$) in einer Richtung auf das angetriebene Element (26) bewegbar ist und

(b) die erste vorbestimmte Strecke ($d^1$) ausreicht, um das Verriegelungselement (48) in Eingriff mit dem angetrieben Element (26) kommen zu lassen, und die zweite vorbestimmte Strecke ($d^2$) ausreicht, um die Freigabe der Haltemittel (64) vom Gehäuseelement (14) zu ermöglichen.

7. Verriegelungssystem nach Anspruch 6, wenn dieser von einem der Ansprüche 2 bis 5 abhängig ist, bei dem

(a) das Verriegelungselement (48) ein erstes Ende (54) und ein zweites Ende (56) aufweist und die Schulter (58) sich in einem dritten vorbestimmten Abstand ($d^3$) vom ersten Ende (54) befindet,

(b) die zweite vorbestimmte Strecke ($d^2$) größer ist als die erste vorbestimmte Strecke ($d^1$) und

(c) der dritte vorbestimmte Abstand ($d^3$) so gewählt ist, daß das erste Ende (54) von der Öffnung (66) des Halteelementes (64) freikommt, wenn sich das Verriegelungselement (48) die zweite vorbestimmte Strecke ($d^2$) bewegt hat, jedoch das Verriegelungselement (48) in Eingriff mit der Öffnung (66) des Halteelementes (64) verbleibt, bis das Verriegelungselement (48) die zweite vorbestimmte Strecke ($d^2$) zurückgelegt hat.

8. Verriegelungssystem nach einem der vorhergehenden Ansprüche, bei dem das angetriebene Element (26) drehbar mit dem Gehäuseelement (14) verbunden ist.

9. Kraftgetriebenes Werkzeug mit einem Verriegelungssystem gemäß einem der vorhergehenden Ansprüche.

10. Verfahren zum Ersetzen des Verriegelungselementes (48) des Verriegelungssystems gemäß Anspruch 1, dadurch gekennzeichnet, daß das Verfahren die folgenden Schritte enthält:

(a) das Verriegelungselement (48) wird nach innen in Richtung auf das angetriebene Element (26) gedrückt, bis das Verriegelungselement (48) sich außer Halteeingriff mit dem Halteelement (64) befindet;

(b) das Halteelement (64) wird bewegt, bis das Verriegelungselement (48) frei aus dem Gehäuseelement (14) entfernbar ist;

(c) das Verriegelungselement (48) wird entfernt;

(d) ein Austausch-Verriegelungselement (48) wird vorgesehen;

(e) das Austausch-Verriegelungselement (48) wird in das Gehäuseelement (14) eingesetzt;

(f) das Austausch-Verriegelungselement (48) wird nach innen in Richtung auf das angetriebene Element (26) gedrückt, bis das Halteelement (64) ersetzt werden kann;

(g) das Halteelement (64) wird in eine Haltestellung im Gehäuseelement (14) bewegt;

(h) das Verriegelungselement (48) wird freigegeben.

**Revendications**

1. Un dispositif de verrouillage pour un outillage motorisé, comprenant:

(a) un élément de carter (14);

(b) un organe mené (26) monté sur l'élément de carter (14) pour se déplacer par rapport à lui;

(c) un canal de verrouillage (60) dans ledit élément de carter (14);

(d) un élément de verrouillage (48) comprenant un corps allongé pouvant coulisser dans ledit canal de verrouillage (60) et déplaçable de façon à bloquer ledit organe mené (26) en l'empêchant de se déplacer par rapport audit élément de carter (14); et,

(e) un moyen de retenue accessible de l'extérieur dudit élément de carter (14) pour maintenir de façon séparable ledit élément de verrouillage (48) relié audit élément de carter (14);

- caractérisé en ce que:

(f) ledit élément de carter (14) est pourvu d'un évidement externe (38) débouchant à une extrémité (40) de l'élément;

(g) ledit moyen de retenue comprend un élément de retenue (64) définissant une ouverture (66) qui reçoit ledit élément de verrouillage (48); et

(h) ledit élément de retenue (64) peut coulisser dans ledit évidement (38) et peut être enlevé de l'extrémité ouverte dudit évidement (38) seulement quand ledit élément de verrouillage (48) est dégagé de l'ouverture (66) dudit élément de retenue (64).

2. Un dispositif de verrouillage tel que revendiqué dans la revendication 1, caractérisé en ce que:

(a) ledit moyen de retenue comprend en outre une partie de retenue (44) formée dans ledit évidement externe (38);

(b) ledit élément de verrouillage (48) est pourvu d'un épaulement (58) formé sur lui;

(c) ledit élément de retenue (64) est normalement retenu entre ladite partie de retenue (44) et l'épaulement (58) dudit élément de verrouillage (48); et

(d) ledit épaulement (58) est situé sur ledit élément de verrouillage (48) de telle sorte que ledit élément de verrouillage (48) reste complètement à l'intérieur de l'évidement externe (38) quand l'élément de retenue (64) s'applique contre ledit épaulement (58).

3. Un dispositif de verrouillage tel que revendiqué dans la revendication 2, caractérisé en ce que ladite partie de retenue (44) comprend un rebord fourchu ouvert à une extrémité; et l'extrémité exposée (54) dudit élément de verrouillage (14) fait normalement saillie au travers dudit élément de retenue (64) et entre les branches du rebord fourchu.

4. Un dispositif de verrouillage tel que revendiqué dans la revendication 3, comprenant en outre:

(a) un moyen de rappel (50) poussant normalement l'élément de verrouillage (48) au contact de l'élément de retenue (64);

(b) l'élément de retenue (64) comportant une surface inférieure; et

(c) l'élément de retenue (64) pouvant être enlevé par glissement de l'espace situé en dessous du rebord fourchu lors d'un mouvement de l'extrémité exposée (54) de l'élément de verrouillage (48) en dessous de la surface inférieure de l'élément de retenue (64) en opposition à la force du moyen de rappel (50).

5. Un dispositif de verrouillage tel que revendiqué dans la revendication 4, dans lequel:

(a) ledit canal de verrouillage (60) comporte une partie (70) de diamètre réduit; et

(b) ledit moyen de rappel (50) est disposé dans le canal de verrouillage (60) coaxialement à l'élément de verrouillage (48) et agit entre la partie (70) de diamètre réduit dudit canal de verrouillage (60) et l'épaulement (58) de l'élément de verrouillage (48).

6. Un dispositif de verrouillage tel que revendiqué dans une quelconque des revendications précédentes, caractérisé en ce que:

(a) ledit élément de verrouillage (48) peut se déplacer d'une première distance prédéterminée $(d^1)$ et d'une seconde distance prédéterminée $(d^2)$ dans l'élément de carter (14) en direction de l'organe mené (26); et

(b) la première distance prédéterminée $(d^1)$ est suffisante pour permettre à l'élément de verrouillage (48) de solliciter l'organe mené (26), et la seconde distance prédéterminée $(d^2)$ est suffisante pour permettre au moyen de retenue (64) d'être séparé de l'élément de carter (14).

7. Un dispositif de verrouillage tel que revendiqué dans la revendication 6, lorsqu'elle est rattachée à l'une quelconque des revendications 2 à 5, caractérisé en ce que:

(a) ledit élément de verrouillage (48) comporte une première extrémité (54) et une seconde extrémité (56), et ledit épaulement (58) est disposé à une troisième distance prédéterminée $(d^3)$ de la première extrémité (54);

(b) la seconde distance prédéterminée $(d^2)$ est supérieure à la première distance prédéterminée $(d^1)$; et

(c) la troisième distance prédéterminée $(d^3)$ est choisie de façon à permettre le dégagement de la première extrémité (54) de l'ouverture (66) de l'élément de retenue (64) quand l'élément de verrouillage (48) s'est déplacé de la seconde distance prédéterminée $(d^2)$, mais maintient l'élément de verrouillage (48) engagé dans l'ouverture (66) de l'élément de retenue (64) jusqu'à ce que l'élément de verrouillage (48) se soit déplacé de ladite seconde distance prédéterminée $(d^2)$.

8. Un dispositif de verrouillage tel que revendiqué dans une quelconque des revendications précédentes, caractérisé en ce que ledit organe mené (26) est relié de façon tournante audit élément de carter (14).

9. Un outillage motorisé comprenant un dispositif de verrouillage tel que revendiqué dans une quelconque des revendications précédentes.

10. Un procédé pour remplacer l'élément de verrouillage (48) d'un dispositif de verrouillage selon la revendication 1, caractérisé en ce que ledit procédé comprend les étapes consistant à:

(a) abaisser l'élément de verrouillage (48) vers l'intérieur en direction de l'organe mené (26) jusqu'à ce que l'élément de verrouillage (48) soit dégagé d'un contact de retenue avec l'élément de retenue (64);

(b) déplacer l'élément de retenue (64) jusqu'à ce que l'élément de verrouillage (48) puisse être enlevé librement de l'élément de carter (14);

(c) enlever l'élément de verrouillage (48);

(d) se pourvoir d'un élément de verrouillage de remplacement (48);

(e) introduire l'élément de verrouillage de remplacement (48) dans l'élément de carter (14);

(f) abaisser l'élément de verrouillage de remplacement (48) vers l'intérieur en direction de l'organe mené (26) jusqu'à ce que l'élément de retenue (64) puisse être remplacé;

(g) déplacer l'élément de retenue (64) jusque dans une position de retenue sur l'élément de carter (14); et

(h) libérer l'élément de verrouillage (48).

FIG. 1

FIG. 2

FIG. 3

FIG. 4

FIG. 5A

FIG. 5B

FIG. 5C

FIG. 5D

FIG. 5E

2